# EUROPEAN PATENT APPLICATION

(11) **EP 4 421 909 A1**
(43) Date of publication of application: **28.08.2024**
(21) Application number: 23861705.4
(22) Date of filing: 28.09.2023
(51) Int. Cl.: H01M 4/36, H01M 4/58, H01M 4/583, H01M 4/136, H01M 4/1397, H01M 10/0525

(54) **NEGATIVE ELECTRODE MATERIAL AND PREPARATION METHOD THEREFOR, AND LITHIUM-ION BATTERY**

(30) Priority: 28.12.2022 CN 202211698602
(71) Applicant: BTR NEW MATERIAL GROUP CO., LTD., Shenzhen, Guangdong 518106 (CN); Dingyuan New Energy Technology Co., Ltd., Huizhou, Guangdong 516227 (CN)
(72) Inventor: GUO, Songtao, Shenzhen, Guangdong 518106 (CN); DENG, Zhiqiang, Shenzhen, Guangdong 518106 (CN); XIE, Wei, Shenzhen, Guangdong 518106 (CN); LI, Fangru, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2023/122628
(87) International publication number: WO 2024/139493

(57) **Abstract**

The present disclosure discloses an anode material and a preparation method and application thereof, the anode material includes a core and a coating layer located on at least part of the surface of the core, the core includes a silicon oxide material, the anode material contains a lithium element, and a mass ratio of the lithium element to the oxygen element in the anode material is a; the anode material is tested through an X-ray photoelectron spectroscopy (Thermo Scientific K-Alpha), a mass ratio of the lithium element to the oxygen element in the region corresponding to the information detectable in the detection process from the surface of the anode material to the inner center region of the anode material is b, a relationship between a and b satisfies 0.4>a>b, the ratio of the lithium element to the oxygen element on the surface layer of the anode material is controlled to be smaller than the ratio of the overall lithium element to the oxygen element of the material, so that the lithium element is more present in the inner center region of the material, the corrosion effect of a water solvent on Si crystal grains in the inner center region of the silicon oxide material is weakened by reducing the content of the lithium element on the surface, and the slurry processing stability is improved.

## Description

### CROSS REFERENCE

This present application claims priority to Chinese Patent Application No. 202211698602.X, entitled "silicon-based anode material and preparation method and application thereof," filed on December 28, 2022, the content of which is incorporated herein by reference in its entirety.

### TECHNICAL FIELD

The present disclosure relates to the technical field of anode materials, in particular to an anode material and a preparation method and application thereof.

### BACKGROUND

The silicon oxide material is used as an anode materials in lithium-ion batteries and has the characteristics of high specific capacity and good structural stability, a SiOₓ skeleton in the silicon oxide material is converted into lithiated SiOₓ such as Li₂SiO₃ and Li₂Si₂O₅ through a pre-lithiation technology, and the problem of the silicon oxide material with a low initial coulombic efficiency can be effectively solved.

However, by directly performing pre-lithiation treatment on the silicon oxide material, the open pore channels of the silicon oxide material expose the internal Si crystal grains, and the surface of the material has abundant lithium-containing compounds such as Li₂SiO₃, LiOH, Li₂CO₃, etc., thereby presenting extremely strong hydrophilicity. In the preparation process of the aqueous slurry, the aqueous solvent can easily infiltrate the pre-lithiated silicon oxide and invade the interior of the material, contact the Si crystal grains, accelerate the reaction with the Si crystal grains under an alkaline condition to generate a large amount of H₂, damage the stability of the slurry, and seriously degrade the processability of the slurry.

In addition, since the lithium-containing compound rich in the surface of the material is highly alkaline, on one hand, the erosion effect of the aqueous solvent on the Si crystal grain inside the silicon oxide material is exacerbated, and on the other hand, the slurry manufacturing equipment is corroded.

Therefore, there is an urgent need for a lithiated silicon-oxygen raw material having excellent electrochemical performance and good processability as an anode material.

### SUMMARY

The present disclosure aims to provide an anode material, a preparation method thereof and a lithium ion battery, and on the premise that the electrochemical performance of the material can be ensured, the processing stability of the aqueous slurry is remarkably improved.

In a first aspect, the present disclosure provides an anode material, the anode material includes a core and a coating layer located on at least a part of a surface of the core, the core includes a silicon oxide material, and the anode material includes a lithium element;

A mass ratio of lithium element to oxygen element in the anode material is a, the anode material is tested by an X-ray photoelectron spectroscopy (Thermo Scientific K-Alpha), and a mass ratio of lithium element to oxygen element in a region corresponding to information detectable in a detection process from a surface of the anode material to an inner central region of the anode material is b, and a relationship between a and b satisfies 0.4>a>b.

In some embodiments, the anode material includes at least one of the following features (1) to (7):
(1) a mass ratio a of lithium element to oxygen element in the anode material satisfies 0.35>a>0.15;
(2) the b satisfies 0.30>b>0.01;
(3) the anode material is tested by an X-ray photoelectron spectroscopy (Thermo Scientific K-Alpha), and a thickness of a region corresponding to information detectable in a detection process from a surface of the anode material to an inner central region of the anode material is 1 nm to 10 nm.
(4) the silicon oxide material includes SiOₓ, wherein 0<x≤2;
(5) the silicon oxide material includes a lithium-containing compound, and the lithium-containing compound includes at least one of Li₂SiO₃, Li₂Si₂O₅, and Li₄SiO₄.
(6) taking the mass of the anode material as 100%, the mass ratio of the lithium element in the anode material is 1 wt% to 15 wt%;
(7) the molar ratio of Si element to O element in the anode material is (0.8 to 1.2): 1.

In some embodiments, the coating layer includes a first coating layer and a second coating layer, the second coating layer is located between the core and the first coating layer, and/or the second coating layer is located on a region of the core surface that is not covered by the first coating layer.

In some embodiments, the anode material includes at least one of the following features (1) to (6):
(1) the second coating layer includes at least one of a phosphate compound of silicon, a phosphate compound of aluminum, a phosphate compound of ammonium, and an aluminum-phosphorus composite oxide;
(2) a material of the first coating layer includes a carbon material;
(3) a mass ratio of the first coating layer in the anode material is 0.1% to 5%;
(4) a mass ratio of the second coating layer in the anode material is 0.1% to 8%;
(5) a thickness of the first coating layer is 1 nm to 1000 nm;
(6) a thickness of the second coating layer is 1 nm to 1000 nm.

In some embodiments, the anode material includes at least one of the following features (1) to (2):
(1) the coating layer is a carbon layer;
(2) the thickness of the coating layer is 1nm to 1000nm.

In some embodiments, the anode material includes at least one of the following features (1) to (5):
(1) a pore volume of the anode material is smaller than 0.01 cm³/g;
(2) a specific surface area of the anode material is smaller than 4 m²/g;
(3) a contact angle θ of the anode material to acetone was tested by a Washburn method, wherein θ>20°;
(4) a pH value of the anode material is 7<pH<1 1.5;
(5) a median particle size of the anode material is 3.0 µm to 10.0 µm.

In a second aspect, an embodiment of the present application provides a method for preparing an anode material, including the following steps:

Pre-lithiating the silicon-oxygen raw material to obtain a pre-lithiated material, wherein, a mass ratio of the lithium element to the silicon-oxygen raw material in the pre-lithiated material is (0.02 to 0.16): 1;

Subjecting a mixture containing the pre-lithiated material and polycarboxylic acid to a first heat treatment to cure the mixture to obtain a precursor;

Performing a second heat treatment on the precursor to carbonize the precursor to obtain an anode material.

In some embodiments, the preparation method includes at least one of the following features (1) to (13):
(1) a temperature of the first heat treatment is 150 °C to 250 °C;
(2) a time of the first heat treatment is 5h to 12h;
(3) the first heat treatment is performed in an air atmosphere;
(4) before performing the first heat treatment on the mixture containing the pre-lithiated material and the polycarboxylic acid, the method further includes: drying the mixture containing the pre-lithiated material and polycarboxylic acid;
(5) before performing the first heat treatment on the mixture containing the pre-lithiated material and the polycarboxylic acid, the method further includes: drying the mixture containing the pre-lithiated material and polycarboxylic acid at a temperature of 45 °C to 90 °C;
(6) after performing the first heat treatment on the mixture containing the pre-lithiated material and the polycarboxylic acid, the method includes: washing, solid-liquid separating and drying the material obtained by the first heat treatment to obtain a precursor;
(7) after performing the first heat treatment on the mixture containing the pre-lithiated material and the polycarboxylic acid, the method includes: washing, solid-liquid separating and drying the material obtained by the first heat treatment, the solvent for washing includes at least one of water and ethanol;
(8) after performing the first heat treatment on the mixture containing the pre-lithiated material and the polycarboxylic acid, the method includes: washing, solid-liquid separation and drying the material obtained by the first heat treatment, the solid-liquid mass ratio of the washing is (1 to 4): 1;
(9) after performing the first heat treatment on the mixture containing the pre-lithiated material and the polycarboxylic acid, the method includes: washing, solid-liquid separation and drying the material obtained by the first heat treatment, the washing time is 1h to 5h;
(10) after performing the first heat treatment on the mixture containing the pre-lithiated material and the polycarboxylic acid, the method includes: washing, solid-liquid separating and drying the material obtained by the first heat treatment, the drying temperature is 80 °C to 120 °C;
(11) a temperaturethe of the second heat treatment is 500 °C to 800 °C;
(12) a time of the second heat treatment is 5h to 12h;
(13) the second heat treatment is performed in a protective gas atmosphere.

In some embodiments, the preparation method of the mixture containing the pre-lithiated material and the polycarboxylic acid includes: placing the polycarboxylic acid in a solvent to obtain a carbon source solution containing polycarboxylic acid, and mixing the pre-lithiated material and the carbon source solution containing polycarboxylic acid to obtain a mixture containing the pre-lithiated material and polycarboxylic acid.

In some embodiments, the preparation method includes at least one of the following features (1) to (4):
(1) a concentration of the carbon source solution is 3 mg/mL to 7 mg/mL;
(2) the polycarboxylic acid includes at least one of citric acid, tartaric acid, maleic acid, trimesic acid, terephthalic acid, malic acid and ethylene diaminetetraacetic acid;
(3) the solvent includes at least one of acetone, water, ethanol, methanol, isopropanol, dimethylformamide, toluene and tetrahydrofuran;
(4) a mass ratio of the pre-lithiated material to the polycarboxylic acid is (20 to 200): 1.

In some embodiments, the silicon-oxygen raw material is a silicon oxide material having a coating layer, and the preparation method of the silicon oxide material having a coating layer includes: providing a silicon oxide material, mixing the silicon oxide material and a coating material, and performing a third heat treatment to obtain a silicon oxide material having a coating layer.

In some embodiments, the preparation method includes at least one of the following features (1) to (4):
(1) a mass ratio of the silicon oxide material to the coating material is 1: (0.005 to 0.05);
(2) the coating material includes at least one of a carbon material, a phosphate compound of silicon, a phosphate compound of aluminum, a phosphate compound of ammonium, and an aluminum-phosphorus composite oxide;
(3) a temperature of the third heat treatment is 500 °C to 1000 °C;
(4) a time of the third heat treatment is 1h to 6h.

In some embodiments, pre-lithiating the silicon-oxygen raw material includes the following steps: mixing the silicon-oxygen raw material and the lithium source, and then performing a fourth heat treatment to obtain a pre-lithiated material.

In some embodiments, the preparation method includes at least one of the following features (1) to (7):
(1) the silicon-oxygen raw material includes SiO_{y}, wherein 0<y≤2;
(2) the lithium source includes at least one of metal lithium, lithium hydride, lithium carbonate, lithium hydroxide, lithium borohydride and lithium aluminum hydride;
(3) a mass ratio of the silicon-oxygen raw material to the lithium source is 100: (2 to 16);
(4) a temperature of the fourth heat treatment is 100 °C to 900 °C;
(5) a time of the fourth heat treatment is 1h to 24h;
(6) the silicon-oxygen raw material is a silicon oxide material having a coating layer;
(7) the silicon-oxygen raw material is a silicon oxide material having a coating layer, and the material of the coating layer includes at least one of a carbon material, a phosphate compound of silicon, a phosphate compound of aluminum, a phosphate compound of ammonium, and an aluminum-phosphorus composite oxide.

In a third aspect, the present disclosure provides a lithium-ion battery, including the anode material according to the first aspect or the anode material prepared by the preparation method according to the second aspect.

The present disclosure has the following beneficial effects: in the present disclosure, the mass ratio of the lithium element to the oxygen element in the anode material is defined as a, the anode material is tested by an X-ray photoelectron spectroscopy (Thermo Scientific K-Alpha), the mass ratio of the lithium element to the oxygen element in the region corresponding to the information that can be detected in the detection process from the surface of the anode material to the inner center region of the anode material is defined as b, since the anode material includes an core and a coating layer located on at least part of the surface of the core, the core is mainly located in a region where the X-ray photoelectron spectroscopy cannot detect the interior of the particles of the anode material, so that the mass of the oxygen element in the anode material is much greater than the mass of the oxygen element in the region corresponding to the information that can be detected in the detection process from the surface of the anode material to the inner center region of the anode material by the X-ray photoelectron spectroscopy, therefore, when a>b, it is indicated that the relative content of the lithium element in the surface layer of the anode material of the present disclosure is relatively small, that is, the lithium element mainly is present in the region of the anode material close to the inner center, so that in the process of processing slurry of the anode material, since the lithium element is mainly located in the inner center region of the anode material, water solvent molecules can be effectively reduced into the interior of the anode material, and silicon crystal grains can be reduced to be eroded, thereby, the stability of the anode material during slurry processing is improved. Wherein, the value of a is mainly related to the content of lithium in the core, and the higher the value of a is, the higher the first efficiency of the material is, so the higher a is, the better. The lower the value of the material b is, the better the hydrophobicity of the material is, so that the water solvent is difficult to infiltrate and permeate the interior of the material, the contact between the Si crystal grains inside the material and the water solvent is effectively isolated, the processing stability of the slurry is improved, and therefore the lower the value of b is, the better. In the present disclosure, both a and b have an upper limit, and when 0.4>a> b is satisfied, it can be ensured that the anode material has both higher first efficiency and better slurry processability. The product surface exposed lithium-containing compound content was reduced.

### BRIEF DESCRIPTION OF DRAWINGS

In order to more clearly describe the technical solutions of the embodiments of the present disclosure, the accompanying drawings that need to be used in the embodiments will be briefly described below, it should be understood that the following drawings only show some embodiments of the present disclosure, and therefore should not be considered as limiting the scope.
FIG. 1 is a structural schematic diagram 1 of the anode material provided by the present disclosure;
FIG. 2 is a structural schematic diagram 2 of the anode material provided by the present disclosure;
FIG. 3 is a flow chart of the preparation method of the anode material according to the present disclosure.

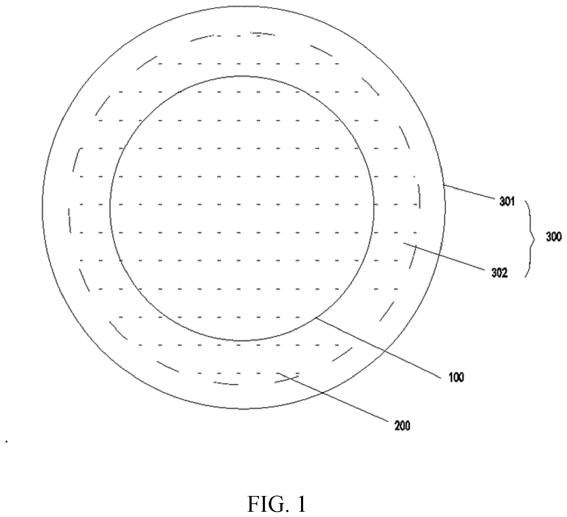

Shown in FIG.1:
100-core;
200-lithium element;
300-coating layer;
301-first coating layer;
302-second coating layer.
1-first region;
2-second region.

### DESCRIPTION OF EMBODIMENTS

In order to make objectives, technical solutions, and advantages of the embodiments of the present disclosure clearer, the technical solutions of the embodiments of the present disclosure will be described clearly and completely below. If specific conditions are not indicated in the Examples, it shall be carried out in accordance with the conventional conditions or the conditions recommended by the manufacturer. The reagents or instruments used are conventional products commercially available from manufacturers.

In the prior art, after the carbon-coated silicon oxide material is pre-lithiated, pores appear in the carbon layer, Li₂Si₂O₅, Li₂SiO₃ and the like inside the material are exposed, and by absorbing H₂O, CO₂ and the like in the air, lithium-containing compounds such as Li₂CO₃, LiOH and the like are formed, and the presence of these lithium-containing compounds causes the material to become very hydrophilic, so that water solvent molecules easily infiltrate and enter Si crystal grains inside the material in the material slurry mixing process. Therefore, reducing the exposure of the lithium-containing compound of the material is a key to improving the processability of the slurry.

In view of this, an embodiment of the present disclosure provides an anode material, as shown in FIG. 1, the anode material includes a core 100 and a coating layer 300 formed on at least a part of a surface of the core 100, the core 100 includes a silicon oxide material, and the anode material includes a lithium element 200.

A mass ratio of lithium element 200 to oxygen element in the anode material is a, the anode material is tested by an X-ray photoelectron spectroscopy (Thermo Scientific K-Alpha), and a mass ratio of lithium element 200 to oxygen element in a region corresponding to information detectable in a detection process from a surface of the anode material to an inner central region of the anode material is b, and a relationship between a and b satisfies 0.4>a>b.

In the above solution, the mass ratio of the lithium element to the oxygen element in the anode material is defined as a in the present disclosure, the anode material is tested by an X-ray photoelectron spectroscopy (Thermo Scientific K-Alpha), the mass ratio of the lithium element to the oxygen element in the region corresponding to the information that can be detected in the detection process from the surface of the anode material to the inner center region of the anode material is defined as b, since the anode material includes an core and a coating layer located on at least part of the surface of the core, the core is mainly located in a region where the X-ray photoelectron spectroscopy cannot detect the interior of the particles of the anode material, so that the mass of the oxygen element in the anode material is much greater than the mass of the oxygen element in the region corresponding to the information that can be detected in the detection process from the surface of the anode material to the inner center region of the anode material by the X-ray photoelectron spectroscopy, therefore, when a>b, it is indicated that the relative content of the lithium element in the surface layer of the anode material of the present disclosure is relatively small, that is, the lithium element mainly is present in the region of the anode material close to the inner center, so that in the process of processing slurry of the anode material, since the lithium element is mainly located in the inner center region of the anode material, water solvent molecules can be effectively reduced into the interior of the anode material, and silicon crystal grains can be reduced to be eroded, thereby, the stability of the anode material during slurry processing is improved. Wherein, the value of a is mainly related to the content of lithium in the core, and the higher the value of a is, the higher the first efficiency of the material is, so the higher a is, the better. The lower the value of the material b is, the better the hydrophobicity of the material is, so that the water solvent is difficult to infiltrate and permeate the interior of the material, the contact between the Si crystal grains inside the material and the water solvent is effectively isolated, the processing stability of the slurry is improved, and therefore the lower the value of b is, the better. In the present disclosure, both a and b have an upper limit, and when 0.4>a> b is satisfied, it can be ensured that the anode material has both higher first efficiency and better slurry processability. The product surface exposed lithium-containing compound content was reduced.

In the present disclosure, when the relationship between a and b satisfies a>b, it indicates that the content of lithium element in the anode material is much greater than the content of lithium element in the second region. If a is greater than 0.4, that is, the doping level of the lithium element in the core is very large, abnormal growth of silicon grains inside the material may be caused, which is not conducive to improvement of the cycle performance of the anode material.

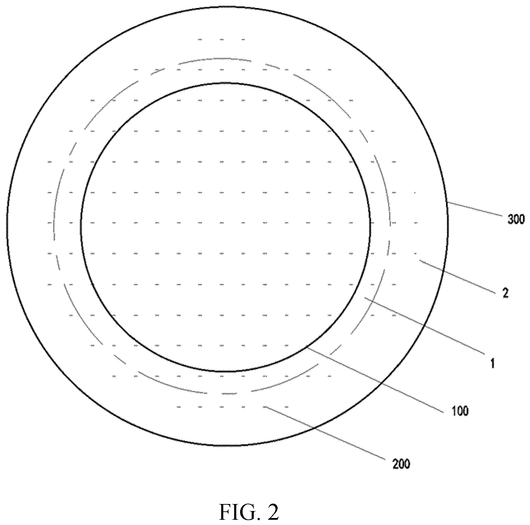

The anode material particles of the present disclosure may be divided into two regions, as shown in FIG. 2, that is, the anode material particles of the present disclosure have a first region 1 and a second region 2, and the second region 2 is: the anode material is tested by an X-ray photoelectron spectroscopy (Thermo Scientific K-Alpha), and a region corresponding to information detectable in a detection process from a surface of the anode material to an inner central region of the anode material. The first region 1 is a region that cannot be detected by the X-ray photoelectron spectroscopy inside the anode material particles. In some embodiments, the first region 1 includes a core 100 and a part of the coating layer 300 (as shown in FIG. 2), and the second region 2 is a region of the anode material other than the first region 1; in other embodiments, the first region 1 includes a complete core 100 or a part of the core 100, and the second region 2 is a region of the anode material other than the first region 1. The present application does not specifically limit the specific boundaries of the first region and the second region, it can be understood that the region in contact with the first region and the second region may be similar to the case where there is an obvious interface at the edge of the coating layer, or may be a case where there is no obvious smooth transition of the interface.

In the present disclosure, it should be noted that test methods of a and b are as follows:

(1) the total Li element mass content of the anode material is tested by full dissolution ICP, and the specific operation is as follows: 0.500g of the anode material was placed in a clean platinum crucible, and then calcined in a muffle furnace in air atmosphere at 750 °C for 2h to completely remove carbon elements; the cooled firing residue was fully reacted with mixed acids of 4mL HNO₃ and 6mL HF, and then the platinum crucible filled with the solution was placed on an electric hot plate at 350 °C until the solvent was completely evaporated; after the crucible was cooled, 6mL HCl was added, heated until the residue was completely dissolved, and the volume was fixed to a 100mL plastic volumetric flask; and finally, the total Li element content of the material was tested with an ICP spectrometer (Agilent 5800VDV ICP-OES).

The all O element mass content in the anode material was tested by ONH element analyzer (ONH-2000), and the specific operation is as follows: 10mg to 13mg anode material was weighed and wrapped in a nickel foil, and then sent to a graphite crucible in an ONH element analyzer for testing, and a was calculated according to the above data.

The mass content of Li element and O element in the second region was tested by X-ray photoelectron spectroscopy (Thermo Scientific K-Alpha). The operation steps are: The anode material of the present disclosure is adhered to a sample stage by using a double-sided carbon conductive adhesive or a common double-sided adhesive, the sample stage with the anode material is placed into an X-ray photoelectron spectroscopy, an excitation source used by the X-ray photoelectron spectroscopy is Al K-alpha rays, a beam spot is 400 µm, a full spectrum scanning energy is 100eV, a step length is 1eV, full spectrum scanning data is obtained, the full spectrum scanning data is read by using Avantage software to obtain content of Li element and O element, and a mass ratio b of Li element and O element is further calculated.

In some implementations, a satisfies 0.35>a>0.15, on the premise that a>b is satisfied, value of a may be 0.16, 0.18, 0.2, 0.22, 0.24, 0.26, 0.28, 0.30, 0.32, 0.34, etc., or may be another value within the above range, which is not limited herein.

In some implementations, b satisfies 0.30>b>0.01, value of b may be 0.02, 0.04, 0.06, 0.08, 0.1, 0.12, 0.14, 0.16, 0.18, 0.20, 0.22, 0.24, 0.26, 0.28, etc., or may be another value within the above range, which is not limited herein.

By controlling the value ranges of a and b within the above ranges, the processing stability of the anode material slurry can be further improved, that is, the prepared slurry does not generate gas bubbles, so that the slurry can be uniformly and flatly coated on the current collector in the coating process, and the negative electrode can exert better electrochemical performance.

In some embodiments, the silicon oxide material includes silicon oxide SiOₓ, wherein 0<x≤2, the silicon oxide is a silicon oxide composite including oxygen atoms and silicon atoms, and the molar ratio of oxygen atoms to silicon atoms is 0 to 2 and does not include 0. It may be a substance formed by compounding two or more of Si, SiO_{0.2}, SiO_{0.5}, SiO_{0.8}, SiO, SiO_{1.2}, SiO_{1.5}, SiO_{1.8} or SiO₂, etc., or a compound having a chemical formula of SiOₓ, and certainly may also be other values within the above range, which is not limited herein.

In some embodiments, the lithium element in the anode material is present in the form of a lithium-containing compound, and the lithium-containing compound includes but is not limited to: At least one of Li₂SiO₃, Li₂Si₂O₅ and Li₄SiO₄.

In some embodiments, based on the mass of the anode material being 100%, the mass ratio of the lithium element in the anode material is 1wt% to 15 wt%, for example, 1wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt% or 15 wt%, etc., and certainly, may also be other values within the above range, which is not limited herein.

In some embodiments, the molar ratio of the Si element to the O element is (0.8 to 1.2): 1, such as 0.8: 1, 0.9: 1, 1.0: 1, 1.1: 1 or 1.2: 1, etc., and certainly, may also be other values within the above range, which is not limited herein. The molar ratio of Si element to O element was tested as follows:

The total O element content of the material is tested by using an ONH element analyzer; the total C element content of the material is tested by using a carbon sulfur analyzer; the total Li element content of the material is tested by using full dissolution ICP; the total impurity content of the material is tested by using full dissolution ICP, Fe, Mn, Ni, Cu, Mg and the like are adopted as impurities, and the remaining part of the material is defaulted to the content of Si elements. By simple conversion, the molar ratio of Si/O can be obtained.

In some embodiments, the coating layer includes a first coating layer and a second coating layer, the second coating layer is located between the core and the first coating layer, and/or the second coating layer is located on a region of the core surface that is not covered by the first coating layer.

In some embodiments, as shown in FIG. 1, the coating layer 300 includes a second coating layer 302 distributed on at least part of the surface of the core 100 and a first coating layer 301 distributed on at least part of the surface of the second coating layer 302.

In some embodiments, a material of the first coating layer 301 includes a carbon material.

In some embodiments, the second coating layer 302 includes at least one of a carbon material, a phosphate compound of silicon, a phosphate compound of aluminum, a phosphate compound of ammonium, and an aluminum-phosphorus composite oxide.

In some embodiments, the mass ratio of the first coating layer 301 in the anode material is 0.1% to 5%, which may be 0.1%, 0.5%, 1%, 2%, 3%, 4% or 5%, etc., certainly, it may also be other values within the above range, which is not limited herein.

In some embodiments, the mass ratio of the second coating layer 302 in the anode material is 0.1% to 8%, which may be 0.1%, 0.5%, 1%, 2%, 3%, 4%, 5%, 6%, 7% or 8%, etc., certainly, it may also be other values within the above range, which is not limited herein.

In some embodiments, a thickness of the first coating layer 301 is 1 nm to 1000 nm, which may be 1 nm, 10 nm, 100 nm, 300 nm, 500 nm, 800 nm, 1000 nm, etc., or may be other values within the above range, which is not limited herein.

In some embodiments, a thickness of the second cladding layer 302 ranges from 1nm to 1000nm, which may be specifically 1 nm, 10 nm, 100 nm, 300 nm, 500 nm, 800 nm, 1000 nm, etc., or may be other values within the above range, which is not limited herein.

It can be understood that when the first coating layer 301 and the second coating layer 302 are made of the same material, the coating layer may be regarded as a single-layer structure, that is, the coating layer 300 is a carbon layer.

In some embodiments, the thickness of the cladding layer 300 ranges from 1nm to 1000nm, such as 1nm, 50nm, 100nm, 300nm, 500nm, 700 nm or 1000nm, etc., certainly, it may also be other values within the above range, which is not limited herein.

In some embodiments, the pore volume of the anode material is smaller than 0.01 cm³/g, and may be 0.001 cm³/g, 0.003 cm³/g, 0.005 cm³/g, 0.008 cm³/g, etc., and certainly, may also be other values within the above ranges, which is not limited herein. The pore volume of the anode material is relatively small, so that an aqueous solvent is difficult to infiltrate and permeate into the material, and the contact between Si crystal grains in the material and the aqueous solvent is effectively isolated.

In some embodiments, the specific surface area of the anode material is smaller than 4 m²/g, and may be 0.5 m²/g, 1 m²/g, 2 m²/g, 3 m²/g, etc., and certainly, may also be other values within the above ranges, which is not limited herein.

The pore volume and the specific surface area of the anode material both reflect parameters of the outer surface of the anode material, and the pore volume and the specific surface are limited within the above range in the present disclosure, it can be seen that the outermost surface of the anode material in the present disclosure is mainly a dense coating layer, which helps to block the permeation erosion of the aqueous solvent in the slurry preparation process.

It should be noted that the pore volume is V, and the specific surface area S may be tested by using an existing test method, for example, may be measured by a gas adsorption BET method, wherein the adsorption gas used in the gas adsorption BET method may be, for example, N₂.

In some embodiments, the contact angle θ of the anode material to acetone is tested by a Washburn method, and θ>20°; θ may be 25°, 30°, 35°, 40°, 45° or 50, etc., and certainly, may also be other values within the above range, which is not limited herein. Within the above limited range, it is shown that the anode material of the present disclosure has good hydrophobicity, and it can be understood that the lower the b value of the anode material, the more beneficial to improving the hydrophobicity of the material, so that the aqueous solvent is difficult to infiltrate and permeate inside the material, effectively isolating the contact between the Si crystal grains inside the material and the aqueous solvent, and being beneficial to improving the processing stability of the slurry. Since the outermost surface of the anode material covers the dense coating layer, the anode material exhibits good hydrophobicity.

It should be noted that the method for testing the contact angle θ is as follows: The anode material is filled in a glass tube with a filter at the bottom and is contacted with a test liquid, after the test liquid rises, the added mass and time in the tube are recorded, and the contact angle is calculated through the Washburn equation. In the test process, n-hexane is used as a test solution, and it is assumed that the contact angle of n-hexane is 0 degrees, so that the capillary constant after powder filling is measured, then the powder is filled again by the same filling method, and the contact angle is tested by acetone.

In some embodiments, the pH value of the anode material satisfies 7<pH<11.5, the pH value may be 8, 8.5, 9, 9.5, 10, 10.5, 11, 11.3, etc., and certainly, may also be other values within the above range, which is not limited herein. Within the above limited range, it is indicated that the anode material of the present disclosure has a small content of lithium-containing compound on the surface, which is beneficial to slowing down the reaction between the aqueous solvent and the internal Si crystal grains and promoting the stability of the slurry. In addition, a lower pH may also avoid corrosion to the slurry production equipment.

It should be noted that the test method of the pH value of the anode material is as follows: 5 g anode material was ultrasonically dispersed in 45 g water and then measured using a pH meter.

In some embodiments, the median particle size of the anode material is 3.0 µm to 10.0 µm, which may be 3.0 µm, 4.0 µm, 5.0 µm, 6.0 µm, 7.0 µm, 8.0 µm, 9.0 µm, 10.0 µm, etc., and certainly may also be other values within the above range, which is not limited herein.

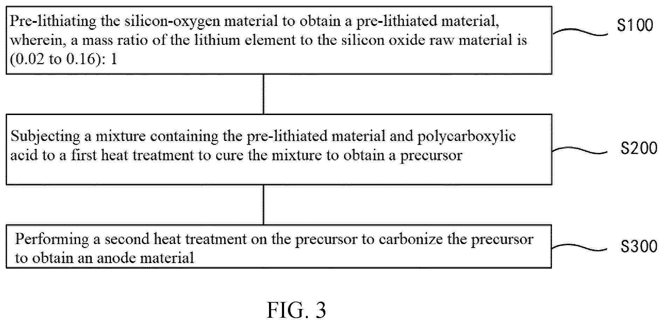

In some embodiments, the present disclosure provides a method for preparing an anode material, as shown in FIG. 3, including the following steps:
pre-lithiating the silicon-oxygen raw material to obtain a pre-lithiated material, wherein, a mass ratio of the lithium element to the silicon-oxygen raw material in the pre-lithiated material is (0.02 to 0.16): 1;
subjecting a mixture containing the pre-lithiated material and polycarboxylic acid to a first heat treatment to cure the mixture to obtain a precursor;
performing a second heat treatment on the precursor to carbonize the precursor to obtain an anode material.

In the above solution, the first heat treatment coating treatment is performed on the silicon-oxygen raw material containing the lithium element by using the polycarboxylic acid in the present disclosure, because the binding force between the polycarboxylic acid and the lithium-containing compound is relatively strong, the polycarboxylic acid tends to combine with the lithium-containing compound to generate the derived carbon, thereby playing a role in fixed-point shielding the lithium-containing compound, rather than randomly distributed on the surface of the silicon-oxygen raw material, and the generated derived carbon is mainly filled in the pores of the material, thereby playing a role in repairing the pores of the pre-lithiated material, and meanwhile, the mass ratio of the lithium element to the silicon-oxygen raw material in the pre-lithiated material is (0.02 to 0.16): 1, the carbon coating of polycarboxylic acid is further performed on the surface of the pre-lithiated material, so that the surface layer of the prepared anode material contains fewer lithium elements, and the anode material exhibits 0.4>a>b; then the residual lithium-containing compound on the surface of the material is removed by washing operation, leaving a small number of pores, and finally the pores on the surface of the material are gradually reduced and closed by high-temperature carbonization treatment of the second heat treatment to form a denser carbon coating layer, so that the anode material can effectively reduce water solvent molecules from entering the interior of the anode material in the slurry mixing process, and reduce the erosion of silicon grains of the anode material, thereby improving the stability of the anode material in the slurry processing process. According to the preparation method disclosed by the disclosure, the specific capacity, the structural stability and the first efficiency of the material are improved through pre-lithiation operation of pre-lithium supplement, the lithium-containing compound can be efficiently and fixed-point shielded by adopting the polycarboxylic acid as a carbon source, and the polycarboxylic acid and the lithium-containing compound are strong in binding capacity, so that the polycarboxylic acid tends to directionally coat the lithium-containing compound instead of randomly coating the surface of the material. Therefore, the problem of slurry processing stability is solved, meanwhile, excessive thickening of the carbon coating layer which reduce the specific capacity of the material is avoided, and the carbonized anode material shows 0.4>a> b, so that the anode material is ensured to have higher first efficiency and better slurry processability.

The detailed steps of the preparation method of the embodiment of the present disclosure are described as follows:

S100, pre-lithiating the silicon-oxygen raw material to obtain a pre-lithiated material, wherein, a mass ratio of the lithium element to the silicon-oxygen raw material is (0.02 to 0.16): 1.

In some embodiments, the silicon-oxygen raw material includes silicon oxide SiO_{y}, wherein 0<y≤2, and SiO_{y} may be SiO_{0.2}, SiO_{0.8}, SiO_{0.8}, SiO, SiO_{1.2}, SiO_{1.5}, SiOi.s, SiO₂, etc., and certainly, may also be other values within the above range, which is not limited herein. In this step, the SiO_{y} skeleton such as Li₂SiO₃, Li₂Si₂O₅, etc., inside the silicon oxide material can be converted into a lithium-containing compound by pre-lithiation, thereby improving the first coulombic efficiency of the material.

In some embodiments, the silicon-oxygen raw material is a silicon oxide material having a coating layer, and the silicon oxide material having the coating layer is used for pre-lithiation, so that the pre-lithiation reaction process is mild, and it is beneficial for the distribution uniformity of lithium elements in the core.

In some embodiments, when the silicon-oxygen raw material is a silicon oxide material having a coating layer, S100: providing a silicon oxide material, mixing the silicon oxide material and the coating material, and performing a third heat treatment to obtain a SiO_{y}/coating layer, that is, a silicon oxide material having a coating layer, and performing a pre-lithiation treatment on the SiO_{y}/coating layer to obtain a pre-lithiated material.

In some embodiments, the mass ratio of the silicon oxide material to the coating material is 1: (0.005 to 0.05), for example, 1: 0.005, 1: 0.008, 1: 0.01, 1: 0.02, 1: 0.03, 1: 0.04 or 1: 0.05, etc., and certainly, may also be other values within the above range, which is not limited herein. Within the above limited range, not only can the silicon oxide material be effectively coated, but also the presence of the coating material can be avoided to reduce the specific capacity of the anode material.

In some embodiments, the coating material includes at least one of a carbon material, a phosphate compound of silicon, a phosphate compound of aluminum, a phosphate compound of ammonium, and an aluminum-phosphorus composite oxide, and the coating material can react with a lithium-containing compound inside the material, such as Li2SiO3, Li2Si2O5, and anchor on the surface of the material, and can also play a role in shielding and reducing exposure of the lithium-containing compound on the surface of the material. In addition, the coating material has good thermal conductivity and ionic conductivity, can improve heat distribution in the pre-lithiation reaction process, and promotes uniform intercalation of lithium ions on the surface of the silicon oxide material, so that the pre-lithiation reaction can be uniformly and gently carried out.

In some embodiments, a temperature of the third heat treatment is 500 °C to 1000 °C, for example, 500 °C, 600 °C, 700 °C, 800 °C, 900 °C, or 1000 °C, etc., and certainly, may also be other values within the above range, which is not limited herein.

In some embodiments, the time of the third heat treatment is 1h to 6h, for example, 1h, 2h, 3h, 4h, 5h or 6h, etc., and certainly, may also be other values within the above range, which is not limited herein.

It can be understood that the preparation method for coating the silicon-oxygen raw material may be omitted, and the commercially available silicon oxide material having a coating layer may be directly purchased.

In some embodiments, pre-lithiating the silicon-oxygen raw material includes the following steps: mixing the silicon-oxygen raw material and the lithium source, and then performing a fourth heat treatment to obtain a pre-lithiated material.

In some embodiments, the lithium source includes at least one of metallic lithium, lithium hydride, lithium carbonate, lithium hydroxide, lithium borohydride, and lithium aluminum hydride.

In some embodiments, the mass ratio of the silicon-oxygen raw material to the lithium source is 100: (2 to 16), which may be 100: 2, 100: 3, 100: 5, 100: 8, 100: 10, 100: 12, 100: 14, or 100: 16, etc., certainly, it may also be other values within the above range, which is not limited herein.

In some embodiments, the temperature of the fourth heat treatment is 100 °C to 900 °C, for example, the reaction temperature may be 100 °C, 200 °C, 300 °C, 400 °C, 500 °C, 600 °C, 700 °C, 800 °C, 900 °C, etc., and certainly, may also be other values within the above range, which is not limited herein.

In some embodiments, the time of the fourth heat treatment is 1h to 24h, may be 1h, 3h, 5h, 8h, 10h, 13h, 15h, 18h, 20h or 24h, etc., and certainly, may also be other values within the above range, which is not limited herein.

S200, subjecting a mixture containing the pre-lithiated material and polycarboxylic acid to a first heat treatment to cure the mixture to obtain a precursor.

In some embodiments, the pre-lithiated material and the polycarboxylic acid are mixed to obtain a mixture containing the pre-lithiated material and the polycarboxylic acid.

In some embodiments, the polycarboxylic acid includes at least one of citric acid, tartaric acid, maleic acid, trimesic acid, terephthalic acid, malic acid, and ethylene diaminetetraacetic acid. The polycarboxylic acid has strong complexing ability, the polycarboxylic acid can be tightly combined with a lithium-containing compound exposed on the surface of a silicon-oxygen raw material, a "fixed-point" polycarboxylic acid-derived carbon coating layer is formed to fill pores of the coating layer on the surface of the silicon-oxygen raw material, then a dense carbon layer is formed in the carbonization process to cover the lithium-containing compound on the surface of the silicon-oxygen raw material containing lithium elements well. Due to the covering effect of the polycarboxylic acid-derived carbon, the second region of the anode material can detect that the Li/O element ratio is lower than the Li/O element ratio in the interior of the anode material, and exhibits 0.4>a>b, that is, the relative content of lithium element in the surface layer of the anode material is small, that is, the lithium element is mainly present in the first region of the anode material, invasion and permeation of solvent water molecules can be effectively blocked in the slurry preparation process of the anode material, erosion of silicon crystal grains in the anode material and generation of gas are avoided, so that the slurry can be uniformly and smoothly coated on the current collector, and the negative electrode can exert more excellent electrochemical performance.

The polycarboxylic acid refers to polycarboxylic acid containing more than 2 carboxylic acid functional groups, and the polycarboxylic acid includes at least one of citric acid, tartaric acid, maleic acid, trimesic acid, terephthalic acid, malic acid, and ethylene diaminetetraacetic acid. The polycarboxylic acid has strong complexing ability and can strongly interact with Li⁺, so that the polycarboxylic acid can be tightly combined with a lithium-containing compound on the surface of a pre-lithiated material, polycarboxylic acid derived carbon is generated through carbonization treatment, pores can be filled with the polycarboxylic acid derived carbon, and the lithium containing compound on the surface of the material is completely covered, so that the hydrophobicity of the material is improved, the contact between Si crystal grains in the material and a water solvent is effectively isolated, and the problem of slurry processing stability is solved.

In some embodiments, the polycarboxylic acid contains a solvent, that is, the polycarboxylic acid is placed in the solvent to obtain a carbon source solution containing the polycarboxylic acid, the pre-lithiated material and the carbon source solution are mixed to obtain a mixture containing the pre-lithiated material and the polycarboxylic acid, and the mixture is subjected to a first heat treatment to be cured and then washed to obtain the precursor.

In some embodiments, the concentration of the carbon source solution is 3 mg/mL to 7 mg/mL, which may be 3 mg/mL, 4 mg/mL, 5 mg/ mL, 6 mg/mL or 7 mg/mL, etc., certainly, it may also be other values within the above range, which is not limited herein.

In some embodiments, the mass ratio of the pre-lithiated material to the polycarboxylic acid is (20 to 200): 1, the mass ratio of the pre-lithiated material to the polycarboxylic acid may be 20: 1, 50: 1, 80: 1, 100: 1, 120: 1, 150: 1, 180: 1, 200: 1, etc., and certainly, may also be other values within the above range, which is not limited herein.

By controlling the concentration of the carbon source solution and the mass ratio of the pre-lithiated material to the polycarboxylic acid, the carbon coating effect can be ensured.

In some embodiments, the solvent includes at least one of acetone, water, ethanol, methanol, isopropanol, dimethylformamide, toluene, and tetrahydrofuran.

In some embodiments, before the first heat treatment is performed on the mixture, the method further includes: the mixture is dried.

In some embodiments, the temperature of the drying treatment is 45 °C to 90 °C, which may be 45 °C, 55 °C, 65 °C, 70 °C, 80 °C, 85 °C or 90 °C, etc., and certainly, may also be other values within the above range, which is not limited herein. In an actual operation process, the pre-lithiated material is mixed with the carbon source solution, and stirred and evaporated to dryness under a heating condition, so that components such as a solvent can be removed, and only polycarboxylic acid and the pre-lithiated material are retained.

In some embodiments, the temperature of the first heat treatment is 150 °C to 250 °C, the temperature of the heat curing treatment may be 150 °C, 180 °C, 200 °C, 230 °C, 250 °C, etc., and certainly, may also be other values within the above range, which is not limited herein. Within the above temperature limit range, the mixture of the pre-lithiated material and the polycarboxylic acid can be partially carbonized to form the polycarboxylic acid cured layer, which achieves the purpose of preliminary shaping, so as to remove the residual soluble lithium-containing compound on the surface of the material by subsequent washing, it should be understood that the removal of residual soluble lithium-containing compounds from the surface of the material by washing results in the formation of certain pores on the surface of the material.

In some embodiments, the time of the first heat treatment is 5h to 12h, and may be 5h, 8h, 10h or 12h, etc., certainly, it may also be other values within the above range, which is not limited herein.

In some embodiments, the first heat treatment is performed in an air atmosphere.

By controlling the temperature and time of the first heat treatment, the preliminary cured layer is formed, and the situation that subsequent washing affects the coating of the carbon source is avoided.

In some embodiments, after the first heat treatment, the method further includes: The material obtained by the first heat treatment is washed, solid-liquid separated and dried, and water in the material is removed by a washing operation.

In some embodiments, the washing solvent includes at least one of water and ethanol.

In some embodiments, the liquid-solid mass ratio of the washing is (1 to 4): 1, and the liquid-solid mass ratio may be 1: 1, 2: 1, 3: 1, 4: 1, etc., and certainly, may also be other values within the above range, which is not limited herein.

In some embodiments, the washing time is 1h to 5h, and the washing time may be 1h, 2h, 3h, 4h or 5h, etc., certainly, it may also be other values within the above range, which is not limited herein.

By controlling the liquid-solid mass ratio and the washing time of washing, residual lithium-containing compounds on the surface of the material are fully removed.

In some embodiments, the temperature of the drying treatment is 80 °C to 120 °C, which may be 80 °C, 90 °C, 100 °C, 110 °C or 120 °C, etc., and certainly, may also be other values within the above range, which is not limited herein.

Step S300, performing a second heat treatment on the precursor to carbonize the precursor to obtain an anode material.

In some embodiments, the second heat treatment temperature is 500 °C to 800 °C, the second heat treatment temperature may be 500 °C, 600 °C, 700 °C, 800 °C, etc., and certainly, may also be other values within the above range, which is not limited herein.

In some embodiments, the second heat treatment time is 5h to 12h, the second heat treatment time may be 5h, 7h, 9h, 11h or 12h, etc., and certainly, may also be other values within the above range, which is not limited herein.

In this step, in the high-temperature carbonization process of the second heat treatment, the pores on the surface of the polycarboxylic acid cured layer are gradually reduced and closed to finally form a carbon coating layer without pores, so that the content of the lithium-containing compound exposed on the surface of the product is reduced. By controlling the temperature and time of heat treatment, the porosity of the surface of the material is reduced, and a substantially void-free dense coating layer is formed.

In some embodiments, the second heat treatment is performed in a protective gas atmosphere, and the protective gas atmosphere may be an inert gas such as argon.

In some embodiments, when the material of the coating layer of the silicon oxide material having the coating layer is a carbon material, the coating layer in the prepared anode material is a carbon layer; when the material of the coating layer of the silicon oxide material having the coating layer includes at least one of a phosphate compound of silicon, a phosphate compound of aluminum, a phosphate compound of ammonium, and an aluminum-phosphorus composite oxide, the prepared anode material includes two composite coating layers.

In summary, in the preparation method of the present disclosure, the polycarboxylic acid has a strong complexing ability and can strongly interact with lithium ions, and when the polycarboxylic acid and the silicon-oxygen raw material containing the lithium element are mixed in a solution, the polycarboxylic acid tends to be tightly combined with the lithium-containing compound exposed on the surface of the material to form a "fixed-point" polycarboxylic acid-derived carbon coating layer filled in the pores of the carbon layer on the surface of the material, and the polycarboxylic acid coating layer is partially carbonized by a first heat treatment to form a preliminary cured layer. On the surface of the polycarboxylic acid cured layer, there is a small amount of lithium-containing compound intercalated therein. The residual lithium-containing compound on the surface of the polycarboxylic acid cured layer is removed by a subsequent water washing step, leaving a small amount of pores. In the high-temperature carbonization process, pores on the surface of the polycarboxylic acid cured layer are gradually reduced and closed, and finally a carbon coating layer without pores is formed, so that the content of a lithium-containing compound exposed on the surface of a product is reduced.

An embodiment of the present disclosure further provides a lithium ion battery, including the above anode material or the anode material prepared by the above preparation method.

The features and performance of the present disclosure are further described in detail below with reference to the embodiments.

### Embodiment 1

This embodiment provides a method for preparing an anode material, which is prepared by the following method:
(1) 1 kg carbon-coated silicon oxide material SiO/C was reacted with 100g lithium metal at a reaction temperature of 500 °C and a reaction time of 3h to obtain a pre-lithiated carbon-coated silicon oxide material Li-SiO/C, wherein the lithium content was 10wt%.
(2) 100 g Li-SiO/C and 1g citric acid were dispersed in 200 mL acetone and evaporated to dryness at 45 °C with stirring.
(3) The evaporated product was thermally cured in an air atmosphere at 200 °C for 12 hours.
(4) 100 g thermally cured product was dispersed in 200 mL water, stirred at room temperature for 3 hours, then suction filtered, and dried at 100 °C.
(5) the dried product is carbonized under Ar gas, the heating rate is controlled to be 1 °C/min, the carbonization temperature is controlled to be 500 °C, the carbonization time is controlled to be 12 hours, after natural cooling, is scattered and sieved to obtain a final product.

It should be noted that the anode material prepared in this embodiment is shown in FIG. 1, the innermost layer is pre-lithium SiO, the original carbon layer of the raw carbon coated silicon oxide material is within the dotted line, the carbon coating layer outside the dotted line is a dense outer layer formed by a polycarboxylic acid carbon source, the lithium-containing compound is mainly present in the range of the original carbon layer of the raw carbon coated silicon oxide material, and the content in the dense outer coating layer is small.

### Embodiment 2

The difference from Embodiment 1 only lies in:
in step (2): 200 g Li-SiO/C and 1 g citric acid were dispersed in 200 mL acetone and evaporated to dryness at 45 °C with stirring.
(3) The evaporated product was thermally cured in an air atmosphere at 250 °C for 5 hours.

### Embodiment 3

The difference from Embodiment 1 only lies in:
(2) 50 g Li-SiO/C and 1g citric acid were dispersed in 200 mL acetone and evaporated to dryness at 45 °C with stirring.
(3) The evaporated product was thermally cured in an air atmosphere at 150 °C for 12 hours.

### Embodiment 4

The difference from Embodiment 1 only lies in: the carbonization conditions are different, the carbonization temperature in step (5) is 800 °C, and the carbonization time is 5 hours.

### Embodiment 5

The difference from Embodiment 1 mainly lies in: the citric acid in step (2) was replaced with an equivalent amount of ethylene diaminetetraacetic acid.

### Embodiment 6

The difference from Embodiment 1 mainly lies in: the citric acid in step (2) was replaced with an equivalent amount of tartaric acid.

### Embodiment 7

The difference from Embodiment 1 mainly lies in: the lithium content of the product in step (1) is different. The details are as follows:
(1) 1 kg carbon-coated silicon oxide material SiO/C was reacted with 50 g lithium metal at a reaction temperature of 500 °C and a reaction time of 3h to obtain a pre-lithiated carbon-coated silicon oxide material Li-SiO/C, wherein the lithium content was 5 wt%.

### Embodiment 8

The difference from Embodiment 1 mainly lies in: the lithium content of the product in step (1) is different. The details are as follows:
1 kg carbon-coated silicon oxide material SiO/C was reacted with 120 g lithium metal at a reaction temperature of 500 °C and a reaction time of 3h to obtain a pre-lithiated carbon-coated silicon oxide material Li-SiO/C, wherein the lithium content was 12 wt%.

### Embodiment 9

The difference from Embodiment 1 mainly lies in: in step (1), the silicon oxide material precursors are different. The details are as follows:
(1) 1 kg aluminum phosphate coated silicon oxide material SiO/C-AlPO₄ is reacted with 100 g metal lithium at a reaction temperature of 500 °C and a reaction time of 3h to obtain a pre-lithiated carbon-coated silicon oxide material Li-SiO/C-AlPO₄, wherein the lithium content is 10 wt%.

### Embodiment 10

The difference from Embodiment 1 mainly lies in: in step (1), the silicon oxide material precursors are different. The details are as follows:
1 kg phosphorus oxide/carbon composite coated silicon oxide material SiO/C-P₂O₅ reacts with 100 g metal lithium at a reaction temperature of 500 °C and a reaction time of 3h to obtain a pre-lithiated carbon-coated silicon oxide material Li-SiO/C-P₂O₅, wherein the lithium content is 10 wt%.

### Embodiment 11

The main difference from Embodiment 3 mainly lies in: the lithium content of the product in step (1) is different. The details are as follows:
1 kg carbon-coated silicon oxide material SiO/C was reacted with 50 g lithium metal at a reaction temperature of 500 °C and a reaction time of 3h to obtain a pre-lithiated carbon-coated silicon oxide material Li-SiO/C, wherein the lithium content was 5 wt%.

### Comparative Example 1

(1) 1 kg carbon-coated silicon oxide material SiO/C was reacted with 100g lithium metal at a reaction temperature of 500 °C and a reaction time of 3h to obtain a pre-lithiated carbon-coated silicon oxide material Li-SiO/C, wherein the lithium content was 10wt%.

It should be supplemented that Comparative Example 1 only perform step (1) in Embodiment 1.

### Comparative Example 2

Comparative Example 2 is a pre-lithiated carbon-coated silicon oxide material Li-SiO/C prepared by a conventional method by reacting the carbon-coated silicon oxide material SiO/C with metallic lithium, wherein the lithium content is 5 wt%.

It should be supplemented that Comparative Example 2 only perform step (1) in Embodiment 7.

### Comparative Example 3

The main difference from Embodiment 1 mainly lies in: Citric acid was replaced with equivalent amounts of asphalt. This step is as follows: 100 g Li-SiO/C and 1 g asphalt were dispersed in 200 mL toluene and evaporated to dryness at 100 °C with stirring.

### Comparative Example 4

The main difference from Embodiment 1 mainly lies in: steps (3) and (4) are not performed.

### Test Example 1

The characterization parameters and electrochemical properties of the negative active material obtained in Embodiments 1 to 11 and Comparative Examples 1 to 4 were tested, as shown in Table 1 and Table 2.

Test Methods: the silicon oxide composite anode materials obtained in Embodiments 1 to 11 and Comparative Examples 1 to 4 is used as the negative electrode active material, uniformly mixed with sodium carboxymethyl cellulose (CMC): styrene-butadiene rubber (SBR) in a mass ratio of 96.5: 1.5: 2, then the mixture is coated onto a copper foil current collector, and dried to obtain a negative electrode pole piece for use. firstly, button battery testing on an obtained pole piece is performed, a battery pack is assembled in an argon glove box, a metal lithium sheet is used as a negative electrode, an electrolyte is 1mol/LLiPF6+ethylene carbonate (EC) + methyl ethyl carbonate (EMC), a diaphragm is a polyethylene/propylene composite micro-porous membrane, electrochemical performance is performed on a battery testing equipment, the battery capacity is set to be standard 480 mAh/g, the charging-discharging voltage is 0.01 to 1.5V, and the charging-discharging rate is 0.1C.

Gas Production Test of Slurry: After the slurry is prepared, 20 g slurry is weighed and sealed in the aluminum-plastic film, then the aluminum-plastic film is stored for 72 hours at room temperature, and the volume change of the aluminum-plastic film before and after storage is measured through a drainage method to obtain the gas production of the slurry.

Stability Test of Slurry: After the slurry is prepared, 500 g slurry is weighed and placed in a beaker, and after the beaker is stored for 72 hours at room temperature, whether the surface of the slurry has a bluish phenomenon is observed. If a bluish phenomenon occurs, it indicates that the styrene-butadiene rubber SBR cannot be uniformly dispersed in the slurry, delamination occurs, and the stability of the slurry becomes poor.

**Table 1. Test Results Summary Table**

| Sample | a | b | V (cm³/g) | S (m²/g) | θ (°) | pH | Gas Production (mL) | Whether or not have bluish phenomenon |
|---|---|---|---|---|---|---|---|---|
| Embodiment 1 | 0.343 | 0.163 | 0.0051 | 1.26 | 43.3 | 10.8 | 0 | No |
| Embodiment 2 | 0.345 | 0.211 | 0.0075 | 1.42 | 30.7 | 11.3 | 1 | No |
| Embodiment 3 | 0.337 | 0.158 | 0.0036 | 1.09 | 49.4 | 10.8 | 0 | No |
| Embodiment 4 | 0.341 | 0.187 | 0.0069 | 1.37 | 40.9 | 11.2 | 0 | No |
| Embodiment 5 | 0.339 | 0.224 | 0.0080 | 1.83 | 24.6 | 11.3 | 2 | No |
| Embodiment 6 | 0.342 | 0.175 | 0.0073 | 1.29 | 38.3 | 11.0 | 0 | No |
| Embodiment 7 | 0.185 | 0.118 | 0.0047 | 1.16 | 45.2 | 10.3 | 0 | No |
| Embodiment 8 | 0.386 | 0.293 | 0.0086 | 1.53 | 26.8 | 11.4 | 7 | No |
| Embodiment 9 | 0.341 | 0.123 | 0.0062 | 1.13 | 47.6 | 10.7 | 0 | No |
| Embodiment 10 | 0.339 | 0.135 | 0.0046 | 1.34 | 39.4 | 11.0 | 0 | No |
| Embodiment 11 | 0.181 | 0.019 | 0.0038 | 1.07 | 50.2 | 9.78 | 0 | No |
| Comparative Example 1 | 0.340 | 0.388 | 0.0242 | 4.34 | 0 | 12.1 | >20 | Yes |
| Comparative Example 2 | 0.187 | 0.243 | 0.0136 | 3.36 | 15.4 | 10.8 | >20 | Yes |
| Comparative Example 3 | 0.341 | 0.376 | 0.0183 | 3.94 | 5.3 | 11.9 | >20 | Yes |
| Comparative Example 4 | 0.342 | 0.350 | 0.0115 | 2.25 | 19.5 | 11.0 | 12 | Yes |

**Table 2 Electrochemical Chemical Performance Data for Each Sample**

| Sample | Reversible Specific Capacity (mAh/g) | First Efficiency (%) | 50 week Capacity Retention Rate (%) |
|---|---|---|---|
| Embodiment 1 | 1349.4 | 92.1 | 88.7 |
| Embodiment 2 | 1365.4 | 91.9 | 87.5 |
| Embodiment 3 | 1321.5 | 91.2 | 89.8 |
| Embodiment 4 | 1411.6 | 91.5 | 86.9 |
| Embodiment 5 | 1348.6 | 91.7 | 87.6 |
| Embodiment 6 | 1354.3 | 91.6 | 88.3 |
| Embodiment 7 | 1406.4 | 86.4 | 89.3 |
| Embodiment 8 | 1386.6 | 93.2 | 86.8 |
| Embodiment 9 | 1373.4 | 92.3 | 89.6 |
| Embodiment 10 | 1367.4 | 92.1 | 89.4 |
| Embodiment 11 | 1389.0 | 86.6 | 89.8 |
| Comparative Example 1 | 1321.9 | 88.5 | 82.6 |
| Comparative Example 2 | 1389.6 | 84.6 | 84.4 |
| Comparative Example 3 | 1324.6 | 89.1 | 83.2 |
| Comparative Example 4 | 1334.7 | 90.1 | 86.2 |

It can be seen from the data in Table 1 and Table 2 that: the anode material includes a core and a coating layer, the core includes a silicon oxide material, the anode material contains a lithium element, the mass ratio of the lithium element to the oxygen element in the anode material is a, the anode material is tested through an X-ray photoelectron spectroscopy (Thermo Scientific K-Alpha), the mass ratio of the lithium element to the oxygen element in a region corresponding to information detectable in the detection process from the surface of the anode material to the inner central region of the anode material is b, which satisfies 0.4>a>b, it is shown that the relative content of the lithium element in the surface layer of the anode material is small, that is, the lithium element is mainly present in a region which cannot be detected in the interior of the particles of the anode material (that is, a first region) by the X-ray photoelectron spectroscopy, in the slurry processing and mixing process of the anode material, water solvent molecules can be effectively reduced from entering the interior of the anode material, silicon crystal grains of the anode material are reduced from being eroded, the stability of the anode material in the slurry processing process is improved, and therefore the comprehensive electrochemical performance of the material is improved. Moreover, it can be seen from Table 1 that the outermost surface of the anode material prepared in the embodiment is basically in a void-free state, and there is almost no gas production, indicating that the contact between the silicon crystal grains inside the material and the aqueous solvent can be effectively isolated by using the outermost dense carbon layer, thereby solving the problem of slurry processing stability.

In Comparative Example 1 and Comparative Example 2, only the silicon-oxygen raw material with the coating layer is used for pre-lithiation to prepare the anode material, and the surface of the anode material contains relatively high lithium elements and does not satisfy a>b, so that water solvent molecules easily enter the interior of the anode material in the process of processing and slurry mixing, silicon crystal grains are eroded, the stability of the anode material is affected, and the specific capacity, the first coulombic efficiency and the cycle stability of the anode material are poor.

In Comparative Example 3, the pre-lithiated material is coated with asphalt, and the asphalt cannot be tightly combined with the lithium-containing compound exposed on the surface of the material, resulting in more pores of the material and relatively higher gas production, and the surface of the material contains relatively higher lithium elements and does not satisfy a>b, so that water solvent molecules easily enter the interior of the anode material in the process of processing and slurry mixing, so that silicon crystal grains are eroded, the stability of the anode material is affected, and the specific capacity, the first coulombic efficiency and the cycle stability of the anode material are poor.

In Comparative Example 4, the polycarboxylic acid is coated and then directly carbonized, and the pores generated by the polycarboxylic acid in the initial cracking process expose part of the lithium-containing compound again, that is, part of the lithium-containing compound is not fully coated to form a intercalation structure, and the mosaic structure is retained in the later carbonization process, that is, the lithium-containing compound is still exposed, so that the material does not satisfy a>b, thereby affecting the stability of the anode material, resulting in poor specific capacity, first coulombic efficiency and cycle stability of the anode material.

The above is only a preferred embodiment of the present disclosure, and is not intended to limit the present disclosure, and the present disclosure can be modified and changed by those skilled in the art. All the modifications, equivalent substitutions and improvements made within the spirit and principles of the present disclosure shall fall into the scope of the present disclosure.

## Claims

1. An anode material, comprising a core and a coating layer located on at least part of a surface of the core, wherein the core comprises a silicon oxide material, and the anode material contains a lithium element;
a mass ratio of lithium element to oxygen element in the anode material is represented as a, and
a mass ratio of lithium element to oxygen element in a region corresponding to information detected by an X-ray photoelectron spectroscopy during a detection process from a surface of the anode material to an inner central region of the anode material is represented as b, and a relationship between a and b satisfies 0.4>a>b.

2. The anode material according to claim 1, comprising at least one of the following features (1) to (7):
(1) a mass ratio a of lithium element to oxygen element in the anode material satisfies 0.35>a>0.15;
(2) b satisfies 0.30>b>0.01;
(3) a thickness of the region corresponding to information detected by an X-ray photoelectron spectroscopy (Thermo Scientific K-Alpha) during a detection process from a surface of the anode material to an inner central region of the anode material ranges from 1 nm to 10 nm.
(4) the silicon oxide material includes SiOₓ, where 0<x≤2;
(5) the silicon oxide material includes a lithium-containing compound, and the lithium-containing compound comprises at least one of Li₂SiO₃, Li₂Si₂O₅, and Li₄SiO₄.
(6) based on 100% of a mass of the anode material, the mass ratio of the lithium element in the anode material ranges from 1 wt% to 15 wt%;
(7) a molar ratio of Si element to O element in the anode material is (0.8 to 1.2): 1.

3. The anode material according to claim 1, comprising a first coating layer and a second coating layer, wherein
the second coating layer is located between the core and the first coating layer, and/or the second coating layer is located on a region of the core surface that is not coated by the first coating layer.

4. The anode material according to claim 3, comprising at least one of the following features (1) to (6):
(1) the second coating layer comprises at least one of a phosphate compound of silicon, a phosphate compound of aluminum, a phosphate compound of ammonium, and an aluminum-phosphorus composite oxide;
(2) a material of the first coating layer comprises a carbon material;
(3) a mass ratio of the first coating layer in the anode material ranges from 0.1% to 5%;
(4) a mass ratio of the second coating layer in the anode material ranges from 0.1% to 8%;
(5) a thickness of the first coating layer ranges from 1 nm to 1000 nm;
(6) a thickness of the second coating layer ranges from 1 nm to 1000 nm.

5. The anode material according to claim 1, comprising at least one of the following features (1) to (2):
(1) the coating layer is a carbon layer;
(2) a thickness of the coating layer ranges from 1nm to 1000nm.

6. The anode material according to claim 1, comprising at least one of the following features (1) to (5):
(1) a pore volume of the anode material is smaller than 0.01 cm³/g;
(2) a specific surface area of the anode material is smaller than 4 m²/g;
(3) a contact angle θ of the anode material to acetone was tested by a Washburn method, wherein θ>20°;
(4) a pH value of the anode material satisfies 7<pH<1 1.5;
(5) a median particle size of the anode material ranges from 3.0 µm to 10.0 µm.

7. A method for preparing an anode material, comprising the following steps:
pre-lithiating the silicon-oxygen raw material to obtain a pre-lithiated material, wherein, a mass ratio of the lithium element to the silicon-oxygen raw material in the pre-lithiated material is (0.02 to 0.16): 1;
subjecting a mixture containing the pre-lithiated material and polycarboxylic acid to a first heat treatment to cure the mixture to obtain a precursor;
performing a second heat treatment on the precursor to carbonize the precursor to obtain an anode material.

8. The method according to claim 7, comprising at least one of the following features (1) to (13):
(1) a temperature of the first heat treatment is 150 °C to 250 °C;
(2) time of the first heat treatment is 5h to 12h;
(3) the first heat treatment is performed in an air atmosphere;
(4) before performing the first heat treatment on the mixture containing the pre-lithiated material and the polycarboxylic acid, the method further comprises: drying the mixture containing the pre-lithiated material and polycarboxylic acid;
(5) before performing the first heat treatment on the mixture containing the pre-lithiated material and the polycarboxylic acid, the method further comprises: drying the mixture containing the pre-lithiated material and polycarboxylic acid at a temperature of 45 °C to 90 °C;
(6) after performing the first heat treatment on the mixture containing the pre-lithiated material and the polycarboxylic acid, the method further comprises: washing, solid-liquid separating and drying a material obtained by the first heat treatment to obtain a precursor;
(7) after performing the first heat treatment on the mixture containing the pre-lithiated material and the polycarboxylic acid, the method further comprises: washing, solid-liquid separating and drying a material obtained by the first heat treatment, the solvent for washing comprises at least one of water and ethanol;
(8) after performing the first heat treatment on the mixture containing the pre-lithiated material and the polycarboxylic acid, the method further comprises: washing, solid-liquid separation and drying a material obtained by the first heat treatment, the solid-liquid mass ratio of the washing is (1 to 4): 1;
(9) after performing the first heat treatment on the mixture containing the pre-lithiated material and the polycarboxylic acid, the method comprises: washing, solid-liquid separation and drying a material obtained by the first heat treatment, the washing time is 1h to 5h;
(10) after performing the first heat treatment on the mixture containing the pre-lithiated material and the polycarboxylic acid, the method comprises: washing, solid-liquid separating and drying a material obtained by the first heat treatment, the drying temperature is 80 °C to 120 °C;
(11) a temperature of the second heat treatment is 500 °C to 800 °C;
(12) time of the second heat treatment is 5h to 12h;
(13) the second heat treatment is performed in a protective gas atmosphere.

9. The method according to claim 7, wherein, the mixture containing the pre-lithiated material and the polycarboxylic acid is prepared by: placing the polycarboxylic acid in a solvent to obtain a carbon source solution containing polycarboxylic acid, and mixing the pre-lithiated material and the carbon source solution containing polycarboxylic acid to obtain a mixture containing the pre-lithiated material and polycarboxylic acid.

10. The method according to claim 9, comprising at least one of the following features (1) to (4):
(1) a concentration of the carbon source solution is 3 mg/mL to 7 mg/mL;
(2) the polycarboxylic acid comprises at least one of citric acid, tartaric acid, maleic acid, trimesic acid, terephthalic acid, malic acid and ethylene diaminetetraacetic acid;
(3) the solvent comprises at least one of acetone, water, ethanol, methanol, isopropanol, dimethylformamide, toluene and tetrahydrofuran;
(4) a mass ratio of the pre-lithiated material to the polycarboxylic acid is (20 to 200): 1.

11. The method according to claim 7, wherein, the silicon-oxygen raw material is a silicon-oxygen material having a coating layer, and the silicon-oxygen material having a coating layer is prepared by: providing a silicon oxide material, mixing the silicon oxide material and a coating material, and performing a third heat treatment to obtain a silicon oxide material having a coating layer.

12. The method according to claim 11, comprising at least one of the following features (1) to (4):
(1) a mass ratio of the silicon oxide material to the coating material is 1: (0.005 to 0.05);
(2) the coating material comprises at least one of a carbon material, a phosphate compound of silicon, a phosphate compound of aluminum, a phosphate compound of ammonium, and an aluminum-phosphorus composite oxide;
(3) a temperature of the third heat treatment ranges from 500 °C to 1000 °C;
(4) time of the third heat treatment ranges from 1h to 6h.

13. The method according to claim 7, wherein, pre-lithiating the silicon-oxygen raw material comprises the following steps: mixing the silicon-oxygen raw material and the lithium source, and then performing a fourth heat treatment to obtain a pre-lithiated material.

14. The method according to claim 13, wherein, the preparation method comprises at least one of the following features (1) to (7):
(1) the silicon-oxygen raw material comprises SiO_{y}, wherein 0<y≤2;
(2) the lithium source comprises at least one of metal lithium, lithium hydride, lithium carbonate, lithium hydroxide, lithium borohydride and lithium aluminum hydride;
(3) a mass ratio of the silicon-oxygen raw material to the lithium source is 100: (2 to 16);
(4) a temperature of the fourth heat treatment is 100 °C to 900 °C;
(5) time of the fourth heat treatment is 1h to 24h;
(6) the silicon-oxygen raw material is a silicon oxide material having a coating layer;
(7) the silicon-oxygen raw material is a silicon oxide material having a coating layer, and the material of the coating layer comprises at least one of a carbon material, a phosphate compound of silicon, a phosphate compound of aluminum, a phosphate compound of ammonium, and an aluminum-phosphorus composite oxide.

15. A lithium ion battery, comprising an anode material according to any one of claims 1 to 6 or an anode material prepared by a method according to any one of claims 7 to 14.
